(19) Europäisches Patentamt
European Patent Office
Office européen des brevets

(11) **EP 1 932 689 A1**

(12) **EUROPEAN PATENT APPLICATION**

(43) Date of publication:
**18.06.2008 Bulletin 2008/25**

(51) Int Cl.:
***B60C 19/00*** *(2006.01)*

(21) Application number: **06291974.1**

(22) Date of filing: **14.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
• **Société de Technologie Michelin**
  **63000 Clermont-Ferrand (FR)**
• **Michelin Recherche et Technique S.A.**
  **1763 Granges-Paccot (CH)**

(72) Inventor: **Dautrey, Nicolas c/o Michelin Research Asia Co Ltd**
**Ota, Gunma 373-8668 (JP)**

(74) Representative: **Dequire, Philippe Jean-Marie Denis**
**M.F.P. Michelin,**
**SGD/LG/PI-F35-Ladoux,**
**23, place des Carmes Déchaux**
**63040 Clermont-Ferrand Cedex 09 (FR)**

(54) **Device for attenuating cavity noise in a tire and wheel assembly**

(57)    A tire (11) provided with resonators (30) entirely integrated inside the tire architecture. The resonators are made of metal tube, preferably deformable and elastic in order to maintain the efficiency of noise absorption and to avoid drawback of other tire performances. Each res- onator (30) is connected to tire cavity (12) by one con- nection hole (31) also made of metal in order to keep its dimension for any tire condition. The resonator is posi- tioned at the bead filler area in order to limit the impact on other performances.

Figure 3

EP 1 932 689 A1

**Description**

Background

The present invention relates to a tire, comprising at least one noise attenuator of the Helmholtz resonator type or the quarter-wave resonator type for attenuating noise generated by rolling tire and wheel assembly relating to tire cavity air vibration modes.

Tire cavity noise is generated by the excitation of the air contained inside tire cavity. In general, the air is excited by the road excitation and the deflection of the tire tread and sidewall in rolling condition.

The effects caused by acoustic resonance of the air contained in a tyre are known. For example, the first cavity mode (sometimes referred to as FCM) is a well-known phenomenon, but the attenuation or suppression thereof always causes numerous difficulties. The natural frequency (or resonant frequency) of a tyre is a direct function of its circumference: one wavelength thus corresponds to the circumference of the wheel. A larger wheel means a greater wavelength, and therefore a lower natural frequency. By way of example, a wheel of a diameter of 15" has a natural frequency of around 230 Hz. The acoustic energy due to the resonant frequency is transmitted primarily in a solid manner: this mode of propagation means that the vibrations caused by the air present in the cavity of the tyre are transmitted to the wheel, then to the support and transmission elements, finishing in the passenger compartment, where the occupants are subjected to the transmitted noise.

Tire cavity noise regularly causes difficulties to car manufacturers. As cars become more and more quiet, the noise generated by the tire cavity resonance mode becomes increasingly annoying for passengers.

Many types of solutions have been developed by different manufactures to reduce tire cavity noise. For example:

Foam material on tire and/or rim;

Helmholtz or quarter-wave resonators either placed in the wheel or attached on tire;

Sectional area variation made by tire or wheel;

Many type of attachment on tire inner liner or rim;

Coupling with tire vibration mode.

Most of the known solutions seem to give positive results on cavity noise. However, they all face an inevitable drawback such as mountability, uniformity, handling and industrialization.

There are certain ways of attempting to overcome this situation. One such way is described in document WO 98/35843. According to this document, quarter-wave resonators are provided in a specially-designed holder, added to the wheel, in particular by mounting the holder on the rim. This device requires the presence of a specific holder. It is therefore an additional piece, which requires material and manufacturing time, hence supplementary costs, on the one hand, and adds an additional mass to the wheel, on the other hand.

According to a variant embodiment described in this same document, the resonators are provided in the rim. However, such a rim has to undergo major modifications in order to incorporate the resonators.

It is thus an object of the invention to provide a solution for designing pneumatic tires having improvement on tire cavity noise and avoiding those important drawbacks.

The present invention is directed at overcoming these various disadvantages, in particular suppressing the acoustic resonance due to the presence of air (or other gas) in the tyre cavity or at the very least attenuating the amplitude thereof.

To do this, the invention provides a tire comprising a carcass structure anchored in each side of the tire in a bead, each bead having a base which is intended to be mounted on the tire's design mounting rim, each bead being extended radially upward by a sidewall portion, a reinforced summit, the sidewall portions joining said summit, said bead further comprising an anchoring zone for anchoring said carcass structure in said bead, said tire further comprising a bead stiffener extending radially outwardly from the bead along a distance H located radially inwardly with respect to the sidewall zone defining the largest radial distance between the two sidewalls, said tire further comprising a plurality of resonators provided in said bead stiffener (or sub air chambers) and adapted to be in fluid communication with the tire inner cavity zone when said tire is mounted on a corresponding wheel, said resonator being dimensioned for the attenuation of at least a portion of the noise frequency range of the tire and wheel assembly, said resonators being circumferentially arranged along the tire circumference.

This arrangement permits the attenuation of the amplitude, or even the suppression, of one or more natural resonances of the cavity, in particular of the first cavity mode. The resonators, which are placed so as to communicate with the cavity C and if they are tuned to the frequency or the range of frequencies on which it is desired to act, permit dissipation of the vibrational energy. It is thus possible to minimise or eliminate the transfer of vibration or sound to the passenger compartment via the wheel.

Advantageously, each resonator is formed of a cavity c, occupying a volume V in fluidic communication with said cavity C. Said fluidic communication is advantageously provided by at least one opening.

In a preferred embodiment, the distance h between the radially inwardly portion of the resonator and the radially outwardly portion of the bead is greater than 1 mm and most preferably greater than 2 mm.

In a further embodiment, the outer diameter d of said chambers is smaller than 80% of the total thickness e of the tire sidewall measured at its largest portion of the bead.

The thickness of said chambers t is preferably comprised between 0.1mm and 3.0mm and most preferably between 0.5 mm and 2.0 mm.

The resonators are advantageously tuned at a working frequency substantially corresponding to a tire cavity resonant frequency.

According to an advantageous embodiment, the resonator or resonators are Helmholtz resonators. This is a type of resonator which is simple to produce and provides very satisfactory results. This type of resonator is easy and precise to calibrate.

Advantageously, the opening of a Helmholtz-type resonator is of a calibrated diameter and length. The volume V and the calibrated dimensions of the opening are determined so as to attenuate the amplitude or suppress at least one acoustic resonance of the air contained in the cavity C of the tyre, corresponding substantially to a given frequency or range of frequencies.

The cavities of Helmholtz resonators are generally of relatively small dimension compared with the wavelength.

According to another advantageous embodiment, the resonator or resonators are quarter-wave resonators. These are also a type of resonator which is simple to produce and provides very satisfactory results. The dimensioning thereof is particularly simple to effect since it is necessary in particular to provide a length of cavity corresponding substantially to one-quarter of the wavelength on which it is desired to act. Several resonators may have lengths corresponding to one-quarter of several different wavelengths. The cavity opening or openings is/are advantageously formed of a tube. Calibration of such tubes is simpler to effect, more precise and less expensive than the direct calibration of the openings in the walls.

Description of the drawings

Other characteristics and advantages of the invention will become apparent from the following description which is given in a non-limitative manner, with reference to the appended figures 1 to 10, in which:

Figure 1: Radial sectional cut view of a tire and wheel showing the placement of resonator in accordance with the invention.

Figure 2: Cut view of several sub-air-chamber resonators integrated to tire architecture in accordance with the invention.

Figure 3: Diagonal cut view of a tire and wheel showing the placement of the connection hole to communicate the resonator and tire cavity in accordance with the invention.

Figure 4: Cut view of one sub-air-chamber resonator integrated to tire architecture for working frequency computation.

Figure 5: Enlarged cut view of the tire bead zone with an integrated resonator.

Figure 6: Results of tire transfer function measurement focused on cavity peak.

Figure 7: Results of tire alone measurement on cleat drum focused on cavity peak.

Figure 8: Results of interior noise inside vehicle measurement on cavity peak.

Figure 9: Summary of measurement results on cavity resonance.

Figure 10: Enlarged cut view of the tire bead zone with two side by side integrated resonators.

Detailed description of the invention

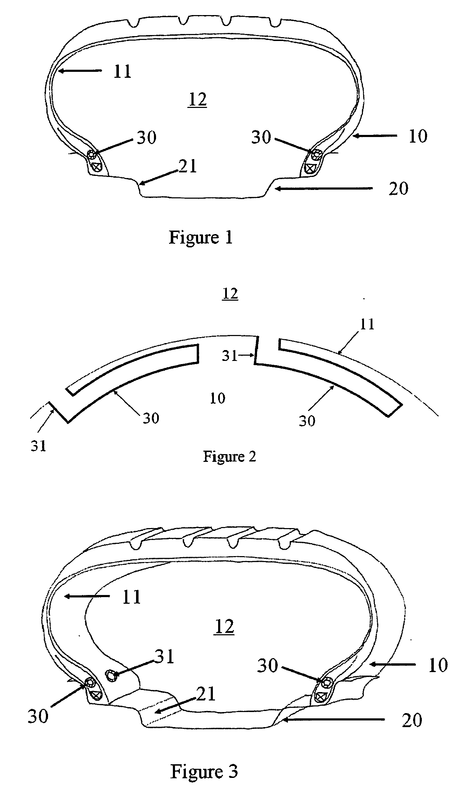

Figure 1 is a radial sectional view of a tire 10 and wheel 20. The interior surface 11 of the tire 10 and the interior surface 21 of the wheel 20 define the boundaries of a tire cavity 12. In a pneumatic tire, the tire cavity 12 contains air volume under pressure that tensions the tire body to support the load on the tire and wheel assembly. The deflection of the tire 10 as it rotates in contact with the ground, the impact due to obstacle and the road roughness transmits energy to the air in tire cavity 12 which generates acoustic energy in the tire cavity 12 air. The acoustic energy from the air is transmitted from the tire cavity as noise to vehicle cabin, which is unpleasant to passengers.

The invention of figure 1 integrates completely sub-air-chamber resonator 30 inside tire 10 architecture. This sub-air-chamber resonator 30 consists of air volume and it is directly communicating with tire cavity 12 through connection hole 31 as shown in figures 2, 3 and 4.

The material of the sub-air-chamber resonator 30 is preferably a metal alloy, such as steel, and more particularly stainless steel, copper, aluminium, etc. Using metal material, the damping of the resonator 30 is low so the sound absorption potential remains high and as a results, the decrease of cavity noise level is also high. Moreover, the loss of rigidity of the tire 10 due to the sub-air-chamber 30 can be recovered by using stiff material such as metal.

The resonator 30 material should also resist to the tire fabrication process, especially curing. During the curing process, tire will be under high pressure and high temperature. If the resonator 30 material is insufficiently resistant to mechanical stresses, the resonator could be collapsed and the shape of the sub-air-chamber would thus not be maintained. On the other hand, if the material can not resist to temperature, the material would melt and the sub-air-chamber 30 would not be provided

Metal alloys also provide stiffness and rigidity. A material having insufficient strength would cause the rigidity of the bead area to be reduced. This would affect the handling and other tire performances. The material should also preferably be substantially deformable and elastic.

If undeformable materials are used, the mounting of the tire on the rim could be problematic. Even after the ovalisation of the bead area of the tire during mounting, the bead area shape must be recovered to rounded shape. If the resonator 30 can not recover its deformation during mounting, the bead area will be deformed and will have consequences on tire aspect, tire inflation due to air leak and uniformity.

Regarding those compromise on tire fabrication and tire performances, one of the most appropriate material for the sub-air-chamber resonator 30 is copper.

During manufacturing, the sub-air-chamber resonator 30 is advantageously covered with glue in order to increase its adherence to the tire elastomeric material.

The sectional shape of the connection hole 31 should preferably be a rounded shape in order to avoid concentration of stress.

Figure 2 shows a cut view of sub-air-chamber resonator 30. The sub-air-chamber resonator 30 is entirely integrated to tire 10 architecture. The sub-air-chamber resonator 30 communicates with the tire cavity 12 with connection holes 31. Therefore, the tire cavity 12 air can communicate directly to the sub-air-chamber 30. The sub-air-chamber 30 is also under the inflation pressure of the tire 10. Due to the communication between tire cavity 12 and sub-air-chamber resonator 30, tire cavity noise is absorbed significantly by the resonator 30.

As shown in figure 2, the number of resonator 30 depends on their length and on the spacing between them. The sub-air-chamber resonator 30 should be positioned along the tire circumferential direction in order to maintain tire 10 geometry. The number of resonators may vary depending on the tire type, dimensions, type of use, etc. For example, a typical tire could be provided with up to six resonators in each sidewall, so in total up to twelve resonators. It is preferable to have three resonators in each sidewall, therefore totalizing six resonators in one tire.

By increasing the number of resonators, the decrease of tire cavity noise is also significant.

Figure 3 shows a diagonal cut view of a tire 10 and wheel 20 showing the placement of the sub-air-chamber resonator 30 connection hole 31 to tire cavity 12. Each sub-air-chamber resonator 30 has a communication hole 31 with tire cavity 12 through tire internal surface 11. The communication hole should preferably be rounded shape in order to well position the working frequency of the resonator.

The communication hole 31 should preferably be made with a material similar to the resonator 30 material.

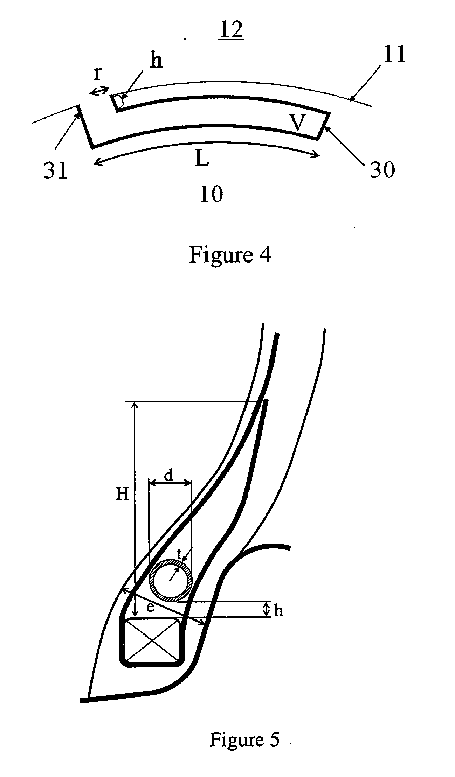

Figure 4 shows an example of a sub-air-chamber resonator 30 with the detail dimension notation for its operating frequency computation. The size of the resonator 30 is dimensioned by the equation that characterizes the operating frequency. Depending on the type of resonator, the appropriate relation should be considered:

Helmholtz resonator:

$$f_H = \frac{c}{2\pi} \sqrt{\frac{\pi r^2}{(h + 1.7r)V}} \qquad (1)$$

Quarter-wave length resonator :

$$f_Q = \frac{c}{4L} \qquad (2)$$

In which:

fH:   Resonance frequency of Helmholtz resonator
fQ:   Resonance frequency of Quarter-wave length resonator
c:   Speed of air
r:   Radius of the communication hole
h:   Length of the communication hole

V: Volume of sub-air chambers

L: Length of the sub-air-chamber resonator

The frequency calculated with relations (1) and (2) corresponds to the working frequency of the resonator 30. By tuning the working frequency of the resonator 30 to the frequency of the tire cavity noise or tire cavity resonance frequency, the cavity noise is attenuated.

It is in fact the volume of air, or of a given gas, contained in the neck which is caused to move in an oscillating movement. It may be likened to a small mass; the cavity of the resonator then acts as a spring on which the mass bears.

In the case where the opening of the cavity is not circular, an equivalent relationship can be established in order to permit dimensioning of this opening. In fact, the opening may be square, rectangular, or adopt a multitude of other forms.

In practice, during travel, due to the loading of the tyre and the rotation of the wheel, there is the risk that splitting of the resonant frequency may occur, in particular in the first cavity mode. With Helmholtz resonators, it is possible to choose to have different resonators each acting at different frequencies, or alternatively to have for example pairs or other sets of resonators, etc.

With resonators of one or the other type, it is possible to aim at an average frequency and/or to increase the range of effectiveness of the resonator. For example, a resonator may cover a given band of frequencies. The range of effectiveness can be widened by arranging a damping material, such as, for example, a foam-type material, in or against a resonator.

Since the resonant frequency of a wheel is directly linked to the diameter of the wheel, it is easy to adapt the present device to all possible wheel dimensions, knowing that the greater the diameter of the wheel the lower the natural frequency will be.

Figure 5 illustrates an example of the implementation of resonators in the tire architecture. The distance h between the radially inwardly portion of the resonator and the radially outwardly portion of the bead is greater than 1 mm and most preferably greater than 2 mm.

The outer diameter d of said chambers is smaller than 80% of the total thickness e of the tire sidewall measured at its largest portion of the bead.

The thickness of said chambers t is comprised between 0.1 mm and 3.0 mm and most preferably between 0.5 mm and 2.0 mm.

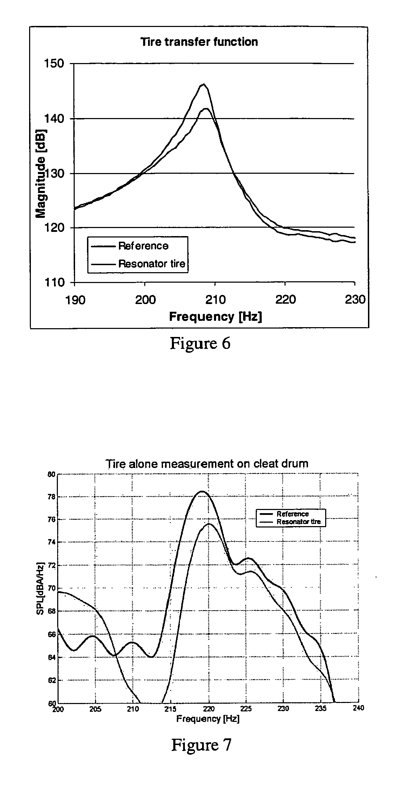

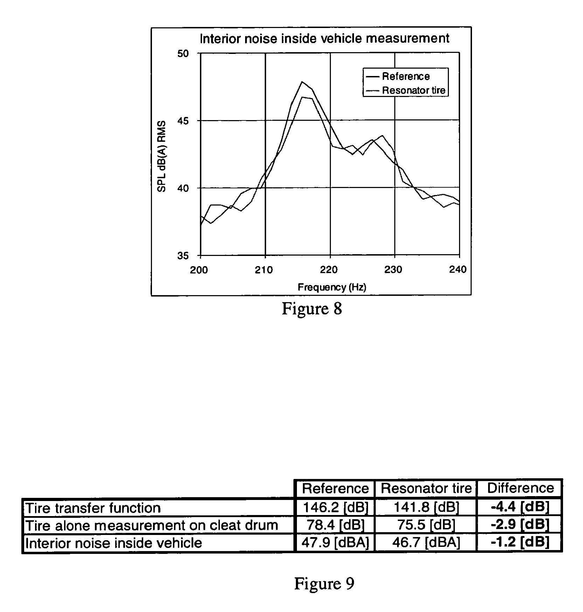

Figures 6 to 8 show examples of measurements obtained with a tire according to the invention. Three different types of measurements were performed in order to investigate the effect of the invention. For each figure, the top curve corresponds to the reference tire and the bottom curve to the invention tire. Figure 9 summarizes the cavity level obtained by those measurements results.

Figure 7 shows examples of the tire transfer function. The graph is zoomed around cavity frequency and the sharp peak centred on 209Hz corresponds to cavity resonance. The tire is loaded on vibration bench which excites the tire and the response is measured at the wheel center. The input is divided by the output in order to measure the pure effect of tire transfer properties. From the figure it is clear that the tire cavity resonance has significantly decreased due to the sub-air-chamber resonator 30. The level of decrease is 4.4dB, which is significant.

Figure 8 shows examples of results of the tire alone on cleat drum. The tire is rolling on drum which is excited by a cleat and the noise emitted by the tire is measured. The peak centered on 219Hz corresponds to tire cavity resonance noise. Due to tire rotation, the tire cavity resonant frequency has shifted slightly. The decrease of the tire cavity noise compared to reference tire is 2.9 [dBA], which is also significant and clearly heard.

Figure 9 shows examples of results of interior noise inside vehicle. The vehicle is rolling on rough road surface which excite the tire cavity noise. The cavity noise excited from the road is measured inside the vehicle. The peak centered at 216 Hz corresponds to tire cavity noise. On this condition also, the decrease of cavity can be measured: -1.2 dBA.

Figure 9 shows the summary results on the different type of measurements. For all measurement conditions, the tire cavity resonant peak has decreased significantly. This results shows that the sub-air-chamber resonator 30 is effective to significantly reduce the tire cavity noise.

Other types of measurements were performed in order to identify any eventual drawback on other tire performances:

| | | |
|---|---|---|
| Resistance to inflation pressure: | 22.0 bar | → Same level as reference |
| Mountability: | Normal | → Same level as reference |
| Air permeation: | -0.08bar/month | → Same level as reference |
| Bead unseating resistance: | 1688daN | → Same level as reference |
| High speed limit: | 290kph | → Same level as reference |

(continued)

| Cornering force: | 200daN/deg | → Same level as reference |

All those measured performances were satisfactory and were positioned at the same level as the reference tire. These results show that the invention can contribute to a significant reduction of the tire cavity noise without impacting other tire performances.

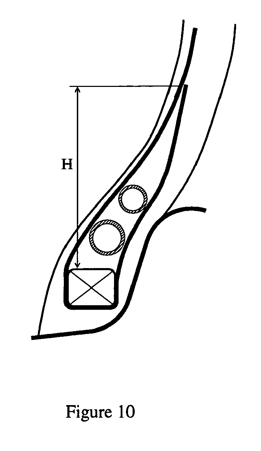

Figure 10 illustrates a further variant of the invention in which resonators are positioned side by side. This embodiment is based on the embodiment presented in figure 5, with the addition of at least one radially upwardly resonator, disposed in the neighbourhood of the first resonator. The radially upwardly resonator may be provided with a smaller radius in order to compensate the reduced available surface in this position.

**Claims**

1. A tire (11) comprising a carcass structure anchored in each side of the tire in a bead, each bead having a base which is intended to be mounted on the tire's design mounting rim, each bead being extended radially upward by a sidewall portion, a reinforced summit, the sidewall portions joining said summit, said bead further comprising an anchoring zone for anchoring said carcass structure in said bead, said tire further comprising a bead stiffener extending radially outwardly from the bead along a distance H located radially inwardly with respect to the sidewall zone defining the largest radial distance between the two sidewalls, said tire further comprising a plurality of resonators (30) provided in said bead stiffener and adapted to be in fluid communication with the tire inner cavity zone (12) when said tire is mounted on a corresponding wheel, said resonator being dimensioned for the attenuation of at least a portion of the noise frequency range of the tire and wheel assembly, said resonators being circumferentially arranged along the tire circumference.

2. The tire of claim 1, in which the distance h between the radially inwardly portion of the resonator (30) and the radially outwardly portion of the bead is greater than 1 mm and most preferably greater than 2 mm.

3. The tire of claim 1 or 2, in which the outer diameter d of said chambers is smaller than 80% of the total thickness e of the tire sidewall measured at its largest portion of the bead.

4. The tire of claim 1 or 2, in which the thickness of said chambers t is comprised between 0.1 mm and 3.0 mm and most preferably between 0.5 mm and 2.0 mm.

5. A tire according to any one of claims 1 to 4, in which said resonators are Helmholtz resonators.

6. A tire according to any one of claims 1 to 4, in which said resonators are quarter-wave resonators.

7. A tire according to any one of preceding claims, in which said resonators are tuned at a working frequency substantially corresponding to a tire cavity resonant frequency.

Figure 1

Figure 2

Figure 3

Figure 4

Figure 5

Figure 6

Figure 7

**Interior noise inside vehicle measurement**

Figure 8

| | Reference | Resonator tire | Difference |
|---|---|---|---|
| Tire transfer function | 146.2 [dB] | 141.8 [dB] | **-4.4 [dB]** |
| Tire alone measurement on cleat drum | 78.4 [dB] | 75.5 [dB] | **-2.9 [dB]** |
| Interior noise inside vehicle | 47.9 [dBA] | 46.7 [dBA] | **-1.2 [dB]** |

Figure 9

Figure 10

**European Patent Office**

**EUROPEAN SEARCH REPORT**

Application Number

EP 06 29 1974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2001 071723 A (BRIDGESTONE CORP) 21 March 2001 (2001-03-21) * abstract; figure 3 * ----- | 1-7 | INV. B60C19/00 |
| Y | WO 2005/068223 A (YOKOHAMA RUBBER CO LTD [JP]; IKEDA TOSHIYUKI [JP]; TANNO ATSUSHI [JP]) 28 July 2005 (2005-07-28) * abstract; figures 1,12 * ----- | 1-7 | |
| A | JP 2004 306714 A (HONDA MOTOR CO LTD) 4 November 2004 (2004-11-04) * abstract; figure 1 * ----- | 1 | |
| A | DE 199 20 681 A1 (AUDI NSU AUTO UNION AG [DE]) 9 November 2000 (2000-11-09) * the whole document * ----- | 1 | |

TECHNICAL FIELDS
SEARCHED (IPC)

B60C

The present search report has been drawn up for all claims

| Place of search | Date of completion of the search | Examiner |
|---|---|---|
| Munich | 7 May 2007 | Buergo, Javier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 06 29 1974

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2007

| Patent document cited in search report | | Publication date | Patent family member(s) | Publication date |
|---|---|---|---|---|
| JP 2001071723 | A | 21-03-2001 | NONE | |
| WO 2005068223 | A | 28-07-2005 | CN 1910061 A | 07-02-2007 |
| | | | DE 112005000174 T5 | 04-01-2007 |
| | | | JP 2005205934 A | 04-08-2005 |
| JP 2004306714 | A | 04-11-2004 | NONE | |
| DE 19920681 | A1 | 09-11-2000 | NONE | |

EPO FORM P0459

For more details about this annex : see Official Journal of the European Patent Office, No. 12/82

**EP 1 932 689 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9835843 A